# EUROPÄISCHE PATENTSCHRIFT

(11) **EP 4 015 247 B1**
(45) Veröffentlichungstag und Bekanntmachung des Hinweises auf die Patenterteilung: **31.01.2024**
(21) Anmeldenummer: 21210070.5
(22) Anmeldetag: 23.11.2021
(51) Int. Cl.: B60C 11/03, B60C 11/13

(54) **FAHRZEUGLUFTREIFEN**
PNEUMATIC TYRE
PNEUMATIQUE DE VÉHICULE

(30) Priorität: 21.12.2020 DE 102020216408
(43) Veröffentlichungstag der Anmeldung: 22.06.2022
(73) Patentinhaber: Continental Reifen Deutschland GmbH, 30165 Hannover (DE)
(72) Erfinder: Ecke, Stefan, 30165 Hannover (DE); Pagac, Lubomir, 30165 Hannover (DE); Soyyuece, Atakan, 30165 Hannover (DE); Özüduru, Ahmet, 30165 Hannover (DE)
(74) Vertreter: Continental Corporation

(56) Entgegenhaltungen:
- EP-A1- 3 124 290
- DE-A1-102007 015 354
- JP-A- H11 198 612
- KR-A- 950 011 150
- US-A1- 2006 102 267
- US-A1- 2011 041 972
- US-A1- 2020 086 691

## Beschreibung

Die Erfindung betrifft einen Fahrzeugluftreifen mit einem Laufstreifen mit zumindest einer schulterseitigen Profilblockreihe, welche durch eine auf Profiltiefe ausgeführte, schulterseitige Umfangsrille begrenzt und mit in Draufsicht parallel zueinander verlaufenden Querrillen mit jeweils einem Rillengrund und einer innerhalb der Bodenaufstandsfläche in die axiale Richtung projizierten Länge versehen ist, wobei jede Querrille einen über den Großteil ihrer Länge sowie über den seitlichen Rand der Bodenaufstandsfläche verlaufenden laufstreifenaußenseitigen Rillenabschnitt mit einer innerhalb der Bodenaufstandsfläche ermittelten Breite und einen in die schulterseitige Umfangsrille einmündenden, laufstreifeninnenseitigen Rillenabschnitt mit einer gegenüber der Breite des laufstreifenaußenseitigen Rillenabschnittes geringeren Breite aufweist, wobei der laufstreifeninnenseitige Rillenabschnitt über seine gesamte Erstreckung in radialer Richtung seichter ausgeführt ist als der laufstreifenaußenseitige Rillenabschnitt, wobei der Rillengrund einen über den laufstreifeninnenseitigen Rillenabschnitt verlaufenden, gestuften Grundabschnitt mit zumindest zwei Stufenflächen aufweist und wobei die Stufenflächen zum Niveau der Profiltiefe in radialer Richtung ermittelte konstante Abstände aufweisen, welche von Stufenfläche zu Stufenfläche in Richtung zur schulterseitigen Umfangsrille schrittweise zunehmen.

Ein derartiger Fahrzeugluftreifen ist beispielsweise aus der US 2011/0041972 A1 bekannt. Der Laufstreifen weist schulterseitige Profilblockreihen mit Querrillen auf, wobei in Umfangsrichtung abwechselnd eine erste Querrille auf eine zweite Querrille folgt. Jede erste Querrille setzt sich aus einem laufstreifenaußenseitigen Rillenabschnitt und einem schmäleren, abschnittsweise trichterförmigen, laufstreifeninnenseitigen Rillenabschnitt zusammen. Der Rillengrund weist im laufstreifeninnenseitigen Rillenabschnitt einen Grundabschnitt mit zwei Stufenflächen auf, deren Abstände zum Niveau der Profiltiefe in Richtung zur schulterseitigen Umfangsrille schrittweise zunehmen. Der Reifen soll ein geringes Abrollgeräusch aufweisen.

Ferner ist aus der EP 3 124 290 A1 ein Fahrzeugluftreifen mit einem Laufstreifen mit zumindest einer schulterseitigen Profilblockreihe mit Querrille bekannt, wobei die Querrillen in die an die schulterseitige Profilblockreihe angrenzende schulterseitige Umfangsrille einmünden, wobei jede Querrille innerhalb der Bodenaufstandsfläche mindestens zwei aneinander anschließende Rillenabschnitte unterschiedlicher Tiefe aufweist, wodurch der beim Abrollen des Reifens Geräuschemissionen verursachende Air-Pumping-Effekt unterdrückt wird. Gemäß dem beschriebenen Ausführungsbeispiel weist jede Querrille einen laufstreifeninnenseitigen Rillenabschnitt, einen mittleren Rillenabschnitt und einen laufstreifenaußenseitigen Rillenabschnitt sowie einen kurzen an die Umfangsrille anschließenden, relativ tief ausgeführten Mündungsabschnitt auf. Der laufstreifeninnenseitige Rillenabschnitt und der Mündungsabschnitt sind schmäler ausgeführt als die beiden weiteren Rillenabschnitte. Bei einer einfacheren Ausgestaltung ist kein Mündungsabschnitt vorgesehen und die Querrille weist nur zwei der drei Rillenabschnitte auf, sodass bei einer entsprechenden Kombination der Abschnitte der Querrille ein Fahrzeugluftreifen der eingangs genannten Art offenbart ist.

Durch den gegenüber dem laufstreifenaußenseitigen Rillenabschnitt schmäleren und seichteren laufstreifeninnenseitigen Rillenabschnitt weist die schulterseitige Profilblockreihe an der schulterseitigen Umfangsrille einen gegenüber der sonstigen Profilblockreihe steifer ausgeführten Umfangsabschnitt auf, welcher auch als "Handlingrippe" bezeichnet wird. Bedingt durch ihre höhere Steifigkeit verbessert die Handlingrippe bei Kurvenfahrt die Übertragung von Seitenführungskräften auf den Untergrund. Ungünstiger Weise ist im Bereich der Handlingrippe durch den schmäleren und seichteren laufstreifeninnenseitigen Rillenabschnitt das Wasserdrainagevermögen reduziert.

Bei Fahrzeugluftreifen der eingangs genannten Art besteht bei der Auslegung der schulterseitigen Profilblockreihe somit ein Zielkonflikt zwischen der für eine gute Seitenkraftübertragung erforderlichen Steifigkeit der Handlingrippe und dem Wasserdrainagevermögen, welcher bisher nicht optimal gelöst ist.

Der Erfindung liegt daher die Aufgabe zugrunde, bei einem Fahrzeugluftreifen eingangs genannter Art den zwischen der für eine gute Seitenkraftübertragung erforderlichen Steifigkeit und dem Wasserdrainagevermögen bestehenden Zielkonflikt besser als bisher zu lösen.

Gelöst wird die gestellte Aufgabe erfindungsgemäß dadurch, dass sich die Querrillen jeweils aus dem laufstreifeninnenseitigen Rillenabschnitt, dem laufstreifenaußenseitigen Rillenabschnitt und einem zwischen den Rillenabschnitten ausgebildeten, sich trichterförmig zwischen diesen verbreiternden Übergangsabschnitt mit einer in die axiale Richtung projizierten Länge von 1,0 mm bis 3,0 mm zusammensetzen.

Durch den gestuften Grundabschnitt im seichter ausgeführten, laufstreifeninnenseitigen Rillenabschnitt wird der an die Umfangsrille angrenzende Bereich der schulterseitigen Profilblockreihe, also die Handlingrippe, gezielt versteift. Da der gestufte Grundabschnitt bis zur schulterseitigen Umfangsrille reicht und die Abstände der Stufenflächen in Richtung zur schulterseitigen Umfangsrille schrittweise zunehmen, ist die Handlingrippe an ihrem unmittelbar an die schulterseitige Umfangsrille angrenzenden, im Hinblick auf die Steifigkeit kritischen Umfangsabschnitt am stärksten versteift. Die zumindest eine weitere Stufenfläche weist zum Niveau der Profiltiefe - im Vergleich zu anderen Stufenfläche - einen geringeren Abstand auf. Auch diese Stufenfläche trägt zur Versteifung der Handlingrippe bei, wobei im Bereich dieser Stufenfläche durch den kleineren Abstand zum Niveau der Profiltiefe ein im Hinblick auf das Wasserdrainagevermögen günstigerer Querrillenquerschnitt (größerer Leervolumenanteil) verbleibt. Durch den speziell gestuften Grundabschnitt gelingt es somit, die Steifigkeit der Profilblockreihe und das Wasserdrainagevermögen der Querrillen auf besonders günstige Weise auszubalancieren, sodass der erwähnte Zielkonflikt vorteilhafter als bisher gelöst ist. Der Übergangsabschnitt ermöglicht einen verwirbelungsarmen Wasserfluss vom laufstreifeninnenseitigen Rillenabschnitt zum laufstreifenaußenseitigen Rillenabschnitt und begünstigt daher die Wasserdrainage.

Gemäß einer bevorzugten Ausführung beträgt jener Abstand, welcher am größten ist, höchstens 50%, insbesondere höchstens 40%, der Profiltiefe. Der größte Abstand ist der Abstand jener Stufenfläche, welche bis zur schulterseitigen Umfangsrille verläuft. Eine derart ausgeführte, unmittelbar an der schulterseitigen Umfangsrille liegende Stufenfläche ist für die Versteifung der Handlingrippe besonders von Vorteil.

Jener Abstand, welcher am kleinsten ist, beträgt vorzugsweise mindestens 2,0 mm. Dies ist der Abstand jener Stufenfläche, welche sich am nächsten zum breiter ausgeführten, laufstreifenaußenseitigen Rillenabschnitt der Querrille befindet.

Gemäß einer weiteren bevorzugten Ausführung ist der gestufte Grundabschnitt derart ausgeführt, dass sich die Abstände unmittelbar benachbarter Stufenflächen voneinander um 0,5 mm bis 1,5 mm, insbesondere um 1,0 mm, unterscheiden. Diese Maßnahme ermöglicht einen besonders vorteilhaften Kompromiss zwischen der für gute Seitenkraftübertragung erforderlichen Steifigkeit der schulterseitigen Profilblockreihe und dem Wasserdrainagevermögen der Querrille.

Eine weitere bevorzugten Ausführung ist dadurch gekennzeichnet, dass der gestufte Grundabschnitt zumindest drei, insbesondere genau drei oder genau vier, Stufenflächen aufweist. Ein solcher Grundabschnitt trägt zu einer besonders vorteilhaften Lösung des erwähnten Zielkonfliktes bei.

Besonders günstig ist eine Ausführung, bei welcher der gestufte Grundabschnitt genau drei Stufenflächen aufweist, wobei
- der Abstand der ersten Stufenfläche zum Niveau der Profiltiefe 2,0 mm bis 3,0 mm, insbesondere 2,5 mm, beträgt,
- der Abstand der zweiten Stufenfläche zum Niveau der Profiltiefe um 0,5 mm bis 1,5 mm, bevorzugt um 1,0 mm, größer ist als der Abstand der ersten Stufenfläche zum Niveau der Profiltiefe und
- der Abstand der dritten Stufenfläche zum Niveau der Profiltiefe um 0,5 mm bis 1,5 mm, bevorzugt um 1,0 mm, größer ist als der Abstand der zweiten Stufenfläche zum Niveau der Profiltiefe.

Zwei weitere bevorzugte Ausführungen betreffen die Ausgestaltung der Handlingrippe bzw. des in dieser verlaufenden laufstreifeninnenseitigen Rillenabschnittes der schulterseitigen Querrillen und sorgen für eine im Hinblick auf die Seitenkraftübertragung besonders vorteilhafte Steifigkeit der schulterseitigen Profilblockreihe.

Die erste diesbezügliche Ausführung ist dadurch gekennzeichnet, dass der laufstreifeninnenseitige Rillenabschnitt eine in die axiale Richtung projizierte Länge von 30% bis 40%, insbesondere von 33% bis 37%, der Länge der Querrille aufweist. Die in die axiale Richtung projizierte Länge des laufstreifeninnenseitigen Rillenabschnittes korreliert mit der bzw. entspricht der in axialer Richtung ermittelten Breite der Handlingrippe.

Die zweite diesbezügliche Ausführung ist dadurch gekennzeichnet, dass die Breite des laufstreifeninnenseitigen Rillenabschnittes 50% bis 70%, insbesondere 55% bis 65%, der Breite des laufstreifenaußenseitigen Rillenabschnittes beträgt.

Bevorzugter Weise beträgt die Breite des laufstreifenaußenseitigen Rillenabschnittes 2,5 mm bis 5,5 mm, insbesondere 3,0 mm bis 4,5 mm.

Für das Wasserdrainagevermögen ist es günstig, wenn der laufstreifenaußenseitige Rillenabschnitt in radialer Richtung an seiner tiefsten Stelle eine Tiefe von bis zu 100% der Profiltiefe aufweist, wobei die Tiefe um insbesondere 1,0 mm bis 1,5 mm geringer ist als die Profiltiefe.

Gemäß einer weitere bevorzugten Ausführung ist in der schulterseitigen Profilblockreihe eine durch die Querrillen unterbrochene, in Draufsicht gerade sowie in Umfangsrichtung umlaufende Zusatznut ausgebildet, welche eine Breite von 1,0 mm bis 3,0 mm, in radialer Richtung eine Tiefe von 1,5 mm bis 2,5 mm, insbesondere von 2,0 mm, und - bezogen auf ihre Nutmittellinie - zur schulterseitigen Umfangsrille in axialer Richtung einen Abstand von 30% bis 40% der Länge der Querrillen aufweist. Die Zusatznut verbessert die Entwässerung der Profilblockreihe, wobei von ihr aufgenommenes Wasser in die Querrille abgeleitet wird.

Bei dieser Ausführung ist es besonders günstig, wenn die Zusatznut in die Übergangsabschnitte der jeweiligen Querrillen einmündet.

Bevorzugter Weise verlaufen die Querrillen, in Draufsicht betrachtet, zur axialen Richtung unter einem Winkel von 0° bis 25°, insbesondere von 5° bis 15°.

Eine weitere bevorzugte Ausführung ist dadurch gekennzeichnet, dass der Laufstreifen eine zweite schulterseitige Profilblockreihe aufweist, welche bezüglich der Reifenäquatorialebene symmetrisch zur anderen schulterseitigen Profilblockreihe ausgeführt ist, wobei die zweite schulterseitige Profilblockreihe gegebenenfalls gegenüber der anderen schulterseitigen Profilblockreihe in Umfangsrichtung versetzt ist.

Weitere Merkmale, Vorteile und Einzelheiten der Erfindung werden nun anhand der Zeichnung, die schematisch ein Ausführungsbeispiel der Erfindung zeigt, näher erläutert. Dabei zeigen
Fig. 1 eine Draufsicht auf einen in die Ebene abgewickelten Umfangsabschnitt eines Laufstreifens eines Fahrzeugluftreifens mit einer Ausführungsvariante der Erfindung,
Fig. 2 eine vergrößerte Draufsicht auf das Detail Z₂ der Fig. 1,
Fig. 3 einen Schnitt entlang der Linie III-III der Fig. 2,
Fig. 4 einen Schnitt entlang der Linie IV-IV der Fig. 2,
Fig. 5 einen Schnitt entlang der Linie V-V der Fig. 2,
Fig. 6 einen Schnitt entlang der Linie VI-VI der Fig. 2 und
Fig. 7 einen Schnitt entlang der Linie VII-VII der Fig. 2.

Gemäß der Erfindung ausgeführte Fahrzeugluftreifen sind Reifen für mehrspurige Kraftfahrzeuge, sowie vorzugsweise Reifen in Radialbauart für Personenkraftwagen, Vans oder Light-Trucks (=Leichte LKWs mit zGM ≤ 7,5 t).

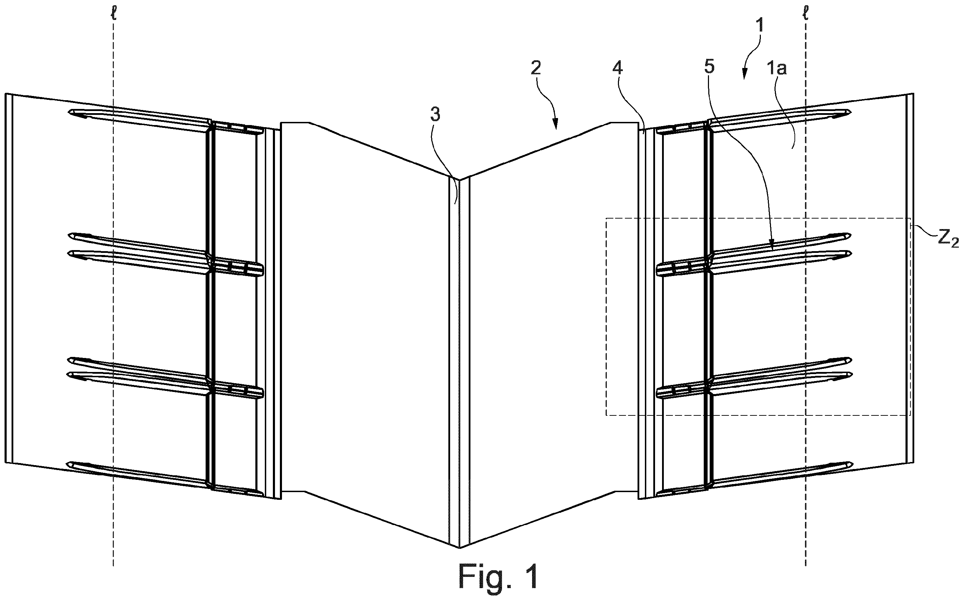

Fig. 1 zeigt eine Draufsicht auf einen Umfangsabschnitt eines Laufstreifens eines Fahrzeugluftreifens. Die seitlichen Ränder der Bodenaufstandsfläche des Laufstreifens sind durch gestrichelte Linien l angedeutet. Die Bodenaufstandsfläche entspricht dem statisch ermittelten Footprint gemäß E.T.R.T.O.-Standards (Last bei 70 % der maximalen Tragfähigkeit bei einem Innendruck von 85 % nach E.T.R.T.O.-Norm).

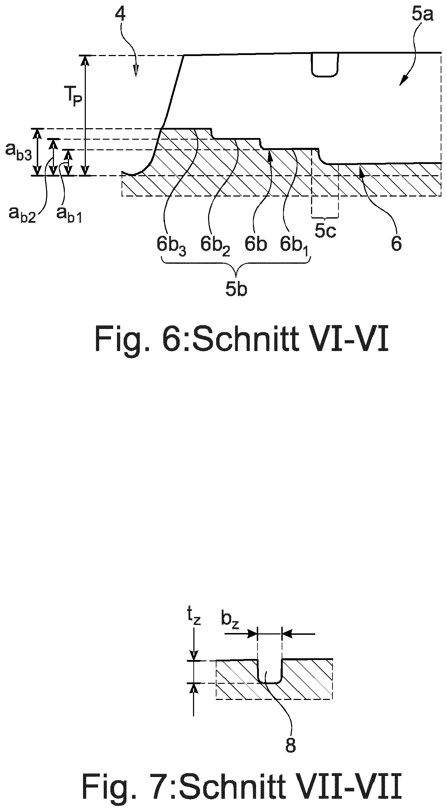

Der Laufstreifen weist zwei schulterseitige Profilblockreihen 1 und zwei mittlere Profilrippen 2 auf, wobei die mittleren Profilrippen 2 durch eine zentrale Umfangsrille 3 und die schulterseitigen Profilblockreihen 1 zur jeweils benachbarten mittleren Profilrippe 2 durch je eine schulterseitige Umfangsrille 4 getrennt sind. Die Umfangsrillen 3, 4 verlaufen beim gezeigten Ausführungsbeispiel in Draufsicht gerade und sind in radialer Richtung auf die jeweils vorgesehene Profiltiefe T_{P} (Fig. 6, gezeigt für eine schulterseitige Umfangsrille 4) ausgeführt, welche für den bevorzugten Reifentyp üblicherweise 6,5 mm bis 10,0 mm beträgt. Die mittleren Profilrippen 2 sind lediglich schematisch dargestellt und können in an sich bekannter Weise mit Rillen, Einschnitten und dergleichen strukturiert sein.

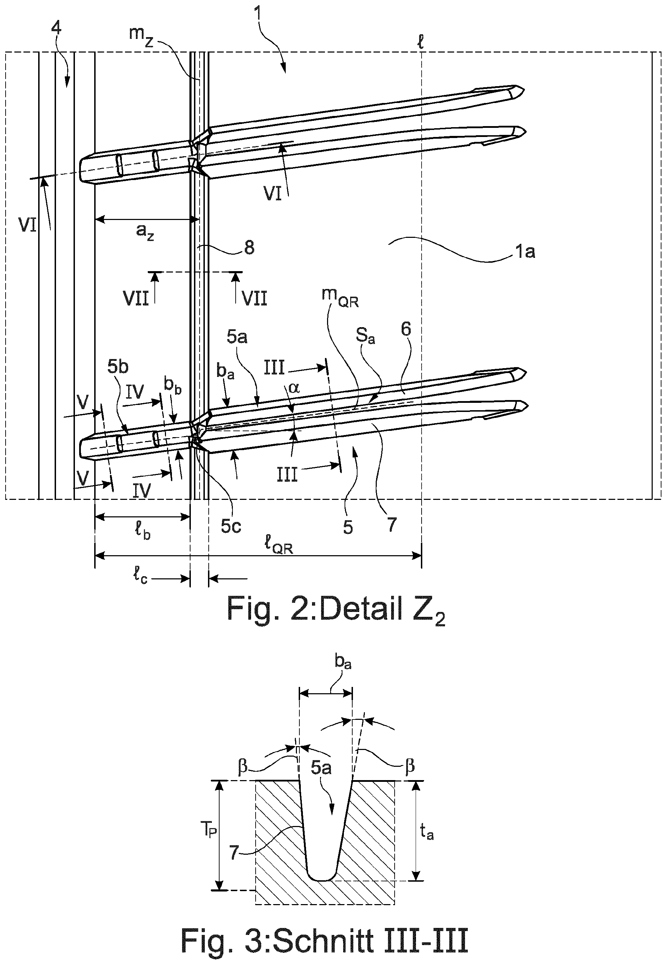

Die schulterseitigen Profilblockreihen 1 weisen jeweils eine Vielzahl von schulterseitigen Profilblöcken 1a auf, welche voneinander durch in die jeweilige schulterseitige Umfangsrille 4 einmündende, schulterseitige Querrillen 5 getrennt sind. Die schulterseitigen Querrillen 5 verlaufen, in Draufsicht betrachtet, gerade, innerhalb jeder schulterseitigen Profilblockreihe 1 parallel zueinander sowie zur axialen Richtung unter einem Winkel α (Fig. 2) von 0° bis 25°, insbesondere von 5° bis 15°, wobei beim gezeigten Ausführungsbeispiel die in der einen schulterseitigen Profilblockreihe 1 befindlichen schulterseitigen Querrillen 5 zu den in der anderen schulterseitigen Profilblockreihe 1 befindlichen schulterseitigen Querrillen 5 bezüglich der axialen Richtung gegensinnig geneigt sind.

Die weitere Ausgestaltung der schulterseitigen Profilblockreihen 1 und der schulterseitigen Querrillen 5 wird nachfolgend anhand der in Fig. 1 rechten schulterseitigen Profilblockreihe 1 sowie unter Bezugnahme auf Fig. 2 bis Fig. 7 erläutert. In Fig. 2 ist bei der unteren Querrille 5 innerhalb der Bodenaufstandsfläche die zugehörige Rillenmittellinie m_{QR} eingezeichnet.

Gemäß Fig. 2 weist jede schulterseitige Querrille 5 innerhalb der Bodenaufstandsfläche eine an der Laufstreifenperipherie ermittelte, in die axialer Richtung projizierte Länge l_{QR} auf und setzt sich aus einem über den seitlichen Rand (Linie 1) der Bodenaufstandsfläche hinausverlaufenden, laufstreifenaußenseitigen Rillenabschnitt 5a, einen gegenüber diesen schmäler ausgeführten laufstreifeninnenseitigen Rillenabschnitt 5b und einem Übergangsabschnitt 5c zusammen. Die Querrille 5 ist über sämtliche Abschnitte 5a, 5b, 5c durch einen Rillengrund 6 und zwei Rillenflanken 7 begrenzt.

Der laufstreifenaußenseitige Rillenabschnitt 5a verläuft über einen Großteil der Länge l_{QR} der Querrille 5 und weist, jeweils ermittelt innerhalb der Bodenaufstandsfläche, eine an der Laufstreifenperipherie senkrecht zur Rillenmittellinie m_{QR} gemessene Breite bₐ (vergl. Fig. 3) von 2,5 mm bis 5,5 mm, insbesondere von 3,0 mm bis 4,5 mm, und in radialer Richtung an seiner tiefsten Stelle eine Tiefe tₐ (Fig. 3) von bis zu 100% der Profiltiefe Tₚ (Fig. 3) auf, wobei die Tiefe tₐ insbesondere 1,0 mm bis 1,5 mm geringer ist als die Profiltiefe T_{P}. Gemäß Fig. 3 verlaufen die Rillenflanken 7 im laufstreifenaußenseitigen Rillenabschnitt 5a, im senkrecht zur Rillenmittellinie m_{QR} ausgerichteten Querschnitt betrachtet (vergl. Schnittlinie III-III in Fig. 2), zur radialen Richtung jeweils unter einem konstanten Winkel β von 0° bis 12°, insbesondere von zumindest 3°, wobei der Winkel β der einen Rillenflanke 7 vom Winkel β der anderen Rillenflanke 7 um insbesondere bis zu 7° abweichen kann.

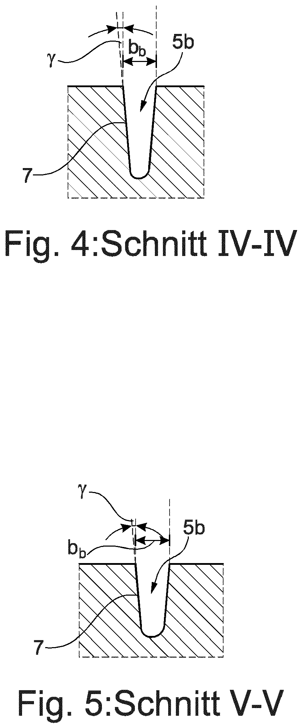

Wie Fig. 2 ferner zeigt, weist der laufstreifeninnenseitige Rillenabschnitt 5b eine in die axiale Richtung projizierte, an der Laufstreifenperipherie ermittelte, auf die Rillenmittellinie m_{QR} bezogene Länge l_{b} von 30% bis 40%, insbesondere von 33% bis 37%, der Länge l_{QR} der Querrille 5 sowie eine an der Laufstreifenperipherie senkrecht zur Rillenmittellinie m_{QR} gemessene Breite b_{b} (vergl. Fig. 4, Fig. 5) von 50% bis 70%, insbesondere von 55% bis 65%, der Breite bₐ des laufstreifenaußenseitigen Rillenabschnittes 5a auf. Die Rillenflanken 7 verlaufen im laufstreifeninnenseitigen Rillenabschnitt 5b, im senkrecht zur Rillenmittellinie m_{QR} ausgerichteten Querschnitt betrachtet, zur radialen Richtung jeweils unter einem konstanten Winkel γ (Fig. 4 und Fig. 5) von 0° bis 10°, insbesondere von 3° bis 7°, wobei die Winkel γ der beiden Rillenflanken 7 vorzugsweise übereinstimmen.

Der Übergangsabschnitt 5c weist eine an der Laufstreifenperipherie ermittelte, in die axiale Richtung projizierte, auf die Mittellinie m_{QR} bezogene Länge l_{c} von 1,0 mm bis 3,0 mm auf, verbreitert sich trichterförmig vom laufstreifeninnenseitigen Rillenabschnitt 5b zum laufstreifenaußenseitigen Rillenabschnitt 5a, wobei er an der Anschlussstelle zum laufstreifeninnenseitigen Rillenabschnitt 5b dessen Breite b_{b} und an der Anschlussstelle zum laufstreifenaußenseitigen Rillenabschnitt 5a dessen Breite bₐ aufweist. Die Rillenflanken 7 verlaufen im Übergangsabschnitt 5c vorzugsweise übereinstimmend zu einem der Rillenabschnitte 5a, 5b und können alternativ in radialer Richtung verlaufen.

Wie Fig. 6 zeigt, weist der Rillengrund 6 einen sich über den kompletten laufstreifeninnenseitigen Rillenabschnitt 5b erstreckenden, beim gezeigten Ausführungsbeispiel in den Übergangsabschnitt 5c hineinragenden, mehrfach gestuften Grundabschnitt 6b auf, durch welchen der laufstreifeninnenseitige Rillenabschnitt 5b über seine gesamte Erstreckung seichter ausgeführt ist als der laufstreifenaußenseitige Rillenabschnitt 5a innerhalb der Bodenaufstandsfläche. Der gestufte Grundabschnitt 6b umfasst eine am weitesten von der schulterseitigen Umfangsrille 4 entfernte erste Stufenfläche 6b₁, eine mittlere zweite Stufenflächen 6b₂ und eine zur schulterseitigen Umfangsrille 4 verlaufende dritte Stufenfläche 6b₃, wobei sich die Stufenflächen 6b₁, 6b₂, 6b₃ gegenüber dem Niveau der Profiltiefe T_{P} in unterschiedlichen, in radialer Richtung ermittelten, jeweils konstanten Abständen a_{b1} (Stufenfläche 6b₁), a_{b2} (Stufenfläche 6b₂), a_{b3} (Stufenflächen 6b₃) befinden. Die Abstände a_{b1}, a_{b2}, a_{b3} nehmen von Stufenfläche zu Stufenfläche in Richtung zur schulterseitigen Umfangsrille 4 schrittweise zu, wobei der kleinste Abstand a_{b1} mindestens 2,0 mm und der größte Abstand a_{b3} höchstens 50%, insbesondere höchstens 40%, der Profiltiefe T_{P} beträgt. Gemäß einer bevorzugten Ausführung beträgt der Abstand a_{b1} 2,0 mm bis 3,0 mm, bevorzugt 2,5 mm, wobei der Abstand a_{b2} um 0,5 mm bis 1,5 mm, bevorzugt um 1,0 mm, größer ist als der Abstand a_{b1} und wobei der Abstand a_{b3} um 0,5 mm bis 1,5 mm, bevorzugt um 1,0 mm, größer ist als der Abstand a_{b2}. Beim gezeigten Ausführungsbeispiel ragt die erste Stufenfläche 6b₁ mit einem Endabschnitt in den Übergangsabschnitt 5c hinein.

Gemäß Fig. 2 ist beim gezeigten Ausführungsbeispiel in der schulterseitigen Profilblockreihe 1 eine sämtliche schulterseitige Profilblöcke 1a durchquerende, in Draufsicht gerade sowie in Umfangsrichtung umlaufende Zusatznut 8 ausgebildet, welche durch die Querrillen 5 partiell unterbrochen ist, in diese daher einmündet und - bezogen auf ihre Nutmittellinie mz - zur schulterseitigen Umfangsrille 4 an der Laufstreifenperipherie in axialer Richtung einen Abstand a_{z} von 30% bis 40% der Länge l_{QR} der Querrillen 5 aufweist. Wie Fig. 7 zeigt, weist die Zusatznut 8 einen flach U-förmigen Querschnitt, an der Laufstreifenperipherie eine in axialer Richtung ermittelte Breite b_{z} von 1,0 mm bis 3,0 mm und in radialer Richtung eine Tiefe t_{z} von 1,5 mm bis 2,5 mm, insbesondere von 2,0 mm, auf. Der Abstand a_{z} und die Breite b_{z} sind, wie in Fig. 2 gezeigt, vorzugsweise derart auf die Länge l_{b} des laufstreifeninnenseitigen Rillenabschnittes 5b und die Länge l_{c} des Übergangsabschnittes 5c abgestimmt, dass die Zusatznut 8 ausschließlich in die Übergangsabschnitte 5c der Querrillen 5 einmündet. Alternativ kann die Zusatznut 8 in die laufstreifenaußenseitigen Rillenabschnitte 5a der Querrillen 5 oder die laufstreifeninnenseitigen Rillenabschnitte 5b der Querrillen 5 einmünden. Sind Querrillen 5 ohne Übergangsabschnitte 5c vorgesehen, mündet die Zusatznut 8 vorzugsweise am gegenseitigen Anschlussbereich der Rillenabschnitte 5a, 5b, also gleichzeitig in beide Rillenabschnitte 5a, 5b, oder angrenzend am gegenseitigen Anschlussbereich der Rillenabschnitte 5a, 5b in einen der Rillenabschnitte 5a, 5b ein.

Die Erfindung ist auf das beschriebene Ausführungsbeispiel nicht beschränkt.

Der Laufstreifen weist zumindest eine gemäß der Erfindung ausgeführte schulterseitige Profilblockreihe 1 auf. Die Zusatzunten 8 sind optional. Der gestufte Grundabschnitt 6b weist zumindest zwei Stufenflächen auf und kann insbesondere bis zu vier Stufenflächen aufweisen.

### Bezugsziffernliste

- 1: schulterseitige Profilblockreihe
- 1a: schulterseitiger Profilblock
- 2: mittlere Profilrippe
- 3: zentrale Umfangsrille
- 4: schulterseitige Umfangsrille
- 5: schulterseitige Querrille
- 5a: laufstreifenaußenseitiger Rillenabschnitt
- 5b: laufstreifeninnenseitiger Rillenabschnitt
- 5c: Übergangsabschnitt
- 6: Rillengrund
- 6b: Grundabschnitt
- 6b₁, 6b₂, 6b₃: Stufenfläche
- 7: Rillenflanke
- 8: Zusatznut
- a_{b1}, a_{b2}, a_{b3}, a_{z}: Abstand
- bₐ, b_{b}, b_{z}: Breite
- 1: Linie (seitlicher Rand der Bodenaufstandsfläche)
- l_{QR}, l_{b}, l_{c}: Länge
- m_{QR}: Rillenmittellinie
- m_{Z}: Nutmittellinie
- tₐ, t_{z}: Tiefe
- T_{P}: Profiltiefe
- Z₂: Detail
- α, β, γ: Winkel

## Patentansprüche

1. Fahrzeugluftreifen mit einem Laufstreifen mit zumindest einer schulterseitigen Profilblockreihe (1), welche durch eine auf Profiltiefe (T_{P}) ausgeführte, schulterseitige Umfangsrille (4) begrenzt und mit in Draufsicht parallel zueinander verlaufenden Querrillen (5) mit jeweils einem Rillengrund (6) und einer innerhalb der Bodenaufstandsfläche in die axiale Richtung projizierten Länge (l_{QR}) versehen ist, wobei jede Querrille (5) einen über den Großteil ihrer Länge (l_{QR}) sowie über den seitlichen Rand (l) der Bodenaufstandsfläche verlaufenden laufstreifenaußenseitigen Rillenabschnitt (5a) mit einer innerhalb der Bodenaufstandsfläche ermittelten Breite (bₐ) und einen in die schulterseitige Umfangsrille (4) einmündenden, laufstreifeninnenseitigen Rillenabschnitt (5b) mit einer gegenüber der Breite (bₐ) des laufstreifenaußenseitigen Rillenabschnittes (5a) geringeren, konstanten Breite (b_{b}) aufweist, wobei der laufstreifeninnenseitige Rillenabschnitt (5b) über seine gesamte Erstreckung in radialer Richtung seichter ausgeführt ist als der laufstreifenaußenseitige Rillenabschnitt (5a), wobei sich die Querrillen (5) jeweils aus dem laufstreifeninnenseitigen Rillenabschnitt (5b), dem laufstreifenaußenseitigen Rillenabschnitt (5a) und einem zwischen den Rillenabschnitten (5a, 5b) ausgebildeten, sich trichterförmig zwischen diesen verbreiternden Übergangsabschnitt (5c) zusammensetzen,
**dadurch gekennzeichnet,**
**dass**
der Rillengrund (6) einen über den laufstreifeninnenseitigen Rillenabschnitt (5b) verlaufenden, gestuften Grundabschnitt (6b) mit zumindest zwei Stufenflächen (6b₁, 6b₂, 6b₃) im laufstreifeninnenseitigen Rillenabschnitt (5b) aufweist.
wobei die Stufenflächen (6b₁, 6b₂, 6b₃) zum Niveau der Profiltiefe (T_{P}) in radialer Richtung ermittelte konstante Abstände (a_{b1}, a_{b2}, a_{b3}) aufweisen, welche von Stufenfläche (6b₁, 6b₂, 6b₃) zu Stufenfläche (6b₁, 6b₂, 6b₃) in Richtung zur wobei der Übergangsabschnitt (5c) eine in die axiale Richtung projizierte Länge (l_{c}) von 1,0 mm bis 3,0 mm aufweist.

2. Fahrzeugluftreifen nach Anspruch 1, **dadurch gekennzeichnet, dass** jener Abstand (a_{b3}), welcher am größten ist, höchstens 50%, insbesondere höchstens 40%, der Profiltiefe (T_{P}) beträgt.

3. Fahrzeugluftreifen nach Anspruch 1 oder 2, **dadurch gekennzeichnet, dass** jener Abstand (a_{b1}), welcher am kleinsten ist, mindestens 2,0 mm beträgt.

4. Fahrzeugluftreifen nach einem der Ansprüche 1 bis 3, **dadurch gekennzeichnet, dass** sich die Abstände (a_{b1}, a_{b2}, a_{b3}) unmittelbar benachbarter Stufenflächen (6b₁, 6b₂, 6b₃) voneinander um 0,5 mm bis 1,5 mm, insbesondere um 1,0 mm, unterscheiden.

5. Fahrzeugluftreifen nach einem der Ansprüche 1 bis 4, **dadurch gekennzeichnet, dass** der gestufte Grundabschnitt (6b) zumindest drei, insbesondere genau drei oder genau vier, Stufenflächen (6b₁, 6b₂, 6b₃) aufweist.

6. Fahrzeugluftreifen nach Anspruch 5, **dadurch gekennzeichnet, dass** der gestufte Grundabschnitt (6b) genau drei Stufenflächen (6b₁, 6b₂, 6b₃) aufweist, wobei
- der Abstand (a_{b1}) der ersten Stufenfläche (6b₁) zum Niveau der Profiltiefe (T_{P}) 2,0 mm bis 3,0 mm, insbesondere 2,5 mm, beträgt,
- der Abstand (a_{b2}) der zweiten Stufenfläche (6b₂) zum Niveau der Profiltiefe (T_{P}) um 0,5 mm bis 1,5 mm, bevorzugt um 1,0 mm, größer ist als der Abstand (a_{b1}) der ersten Stufenfläche (6b₁) zum Niveau der Profiltiefe (T_{P}) und
- der Abstand (a_{b3}) der dritten Stufenfläche (6b₃) zum Niveau der Profiltiefe (T_{P}) um 0,5 mm bis 1,5 mm, bevorzugt um 1,0 mm, größer ist als der Abstand (a_{b2}) der zweiten Stufenfläche (6b₂) zum Niveau der Profiltiefe (T_{P}).

7. Fahrzeugluftreifen nach einem der Ansprüche 1 bis 6, **dadurch gekennzeichnet, dass** der laufstreifeninnenseitige Rillenabschnitt (5b) eine in die axiale Richtung projizierte Länge (l_{b}) von 30% bis 40%, insbesondere von 33% bis 37%, der Länge (l_{QR}) der Querrille (5) aufweist.

8. Fahrzeugluftreifen nach einem der Ansprüche 1 bis 7, **dadurch gekennzeichnet, dass** die Breite (b_{b}) des laufstreifeninnenseitigen Rillenabschnittes (5b) 50% bis 70%, insbesondere 55% bis 65%, der Breite (bₐ) des laufstreifenaußenseitigen Rillenabschnittes (5a) beträgt.

9. Fahrzeugluftreifen nach einem der Ansprüche 1 bis 8, **dadurch gekennzeichnet, dass** die Breite (bₐ) des laufstreifenaußenseitigen Rillenabschnittes (5a) 2,5 mm bis 5,5 mm, insbesondere 3,0 mm bis 4,5 mm, beträgt.

10. Fahrzeugluftreifen nach einem der Ansprüche 1 bis 9, **dadurch gekennzeichnet, dass** der laufstreifenaußenseitige Rillenabschnitt (5a) in radialer Richtung an seiner tiefsten Stelle eine Tiefe (tₐ) von bis zu 100% der Profiltiefe (T_{P}) aufweist, wobei die Tiefe (tₐ) insbesondere um 1,0 mm bis 1,5 mm geringer ist als die Profiltiefe (T_{P}).

11. Fahrzeugluftreifen nach einem der Ansprüche 1 bis 10, **dadurch gekennzeichnet, dass** in der schulterseitigen Profilblockreihe (1) eine durch die Querrillen (5) unterbrochene, in Draufsicht gerade sowie in Umfangsrichtung umlaufende Zusatznut (8) ausgebildet ist, welche eine Breite (b_{z}) von 1,0 mm bis 3,0 mm, in radialer Richtung eine Tiefe (t_{z}) von 1,5 mm bis 2,5 mm, insbesondere von 2,0 mm, und - bezogen auf ihre Nutmittellinie (m_{z}) - zur schulterseitigen Umfangsrille (4) in axialer Richtung einen Abstand (a_{z}) von 30% bis 40% der Länge (l_{QR}) der Querrillen (5) aufweist.

12. Fahrzeugluftreifen nach einem der Ansprüche 1 bis 11, **dadurch gekennzeichnet, dass** die Zusatznut (8) in die Übergangsabschnitte (5c) der jeweiligen Querrillen (5) einmündet.

13. Fahrzeugluftreifen nach einem der Ansprüche 1 bis 12, **dadurch gekennzeichnet, dass** die Querrillen (5), in Draufsicht betrachtet, zur axialen Richtung unter einem Winkel (α) von 0° bis 25°, insbesondere von 5° bis 15°, verlaufen.

14. Fahrzeugluftreifen nach einem der der Ansprüche 1 bis 13, **dadurch gekennzeichnet, dass** der Laufstreifen eine zweite schulterseitige Profilblockreihe (1) aufweist, welche bezüglich der Reifenäquatorialebene symmetrisch zur anderen schulterseitigen Profilblockreihe (1) ausgeführt ist, wobei die zweite schulterseitige Profilblockreihe (1) gegebenenfalls gegenüber der anderen schulterseitigen Profilblockreihe (1) in Umfangsrichtung versetzt ist.

## Claims

1. Pneumatic vehicle tyre having a tread with at least one shoulder-side profile-block row (1) which is delimited by a shoulder-side circumferential channel (4) formed to a profile depth (T_{P}) and which is provided with transverse channels (5) extending parallel to one another in plan view, each of which transverse channels has a channel base (6) and a length (l_{QR}) projected into the axial direction within the ground contact area, wherein each transverse channel (5) has a tread-outer-side channel portion (5a), which extends over most of its length (l_{QR}) and over the lateral edge (l) of the ground contact area and has a width (bₐ) determined within the ground contact area, and a tread-inner-side channel portion (5b), which opens out into the shoulder-side circumferential channel (4) and has a constant width (b_{b}) that is relatively small in comparison with the width (bₐ) of the tread-outer-side channel portion (5a), wherein, over its entire extent, the tread-inner-side channel portion (5b) is shallower in the radial direction than the tread-outer-side channel portion (5a), wherein the transverse channels (5) are each made up of the tread-inner-side channel portion (5b), the tread-outer-side channel portion (5a) and a transition portion (5c) which is formed between the channel portions (5a, 5b) and which widens in a funnel-like manner therebetween, **characterized in that** the channel base (6) has a stepped base portion (6b) which extends over the tread-inner-side channel portion (5b) and which has at least two step surfaces (6b₁, 6b₂, 6b₃) in the tread-inner-side channel portion (5b), wherein the step surfaces (6b₁, 6b₂, 6b₃) are at constant distances (a_{b1}, a_{b2}, a_{b3}), determined in the radial direction, from the level of the profile depth (T_{P}), said distances increasing from step surface (6b₁, 6b₂, 6b₃) to step surface (6b₁, 6b₂, 6b₃) in the direction of the shoulder-side circumferential channel in a stepwise manner, wherein the transition portion (5c) has a length (l_{c}) projected into the axial direction of 1.0 mm to 3.0 mm.

2. Pneumatic vehicle tyre according to Claim 1, **characterized in that** that distance (a_{b3}) which is greatest is at most 50%, in particular at most 40%, of the profile depth (Tp).

3. Pneumatic vehicle tyre according to Claim 1 or 2, **characterized in that** that distance (a_{b1}) which is smallest is at least 2.0 mm.

4. Pneumatic vehicle tyre according to one of Claims 1 to 3, **characterized in that** the distances (a_{b1}, a_{b2}, a_{b3}) of directly adjacent step surfaces (6b₁, 6b₂, 6b₃) differ from one another by 0.5 mm to 1.5 mm, in particular by 1.0 mm.

5. Pneumatic vehicle tyre according to one of Claims 1 to 4, **characterized in that** the stepped base portion (6b) has at least three, in particular exactly three or exactly four, step surfaces (6b₁, 6b₂, 6b₃).

6. Pneumatic vehicle tyre according to Claim 5, **characterized in that** the stepped base portion (6b) has exactly three step surfaces (6b₁, 6b₂, 6b₃), wherein
- the distance (a_{b1}) of the first step surface (6b₁) from the level of the profile depth (T_{P}) is 2.0 mm to 3.0 mm, in particular 2.5 mm,
- the distance (a_{b2}) of the second step surface (6b₂) from the level of the profile depth (T_{P}) is 0.5 mm to 1.5 mm, preferably 1.0 mm, greater than the distance (a_{b1}) of the first step surface (6b₁) from the level of the profile depth (T_{P}), and
- the distance (a_{b3}) of the third step surface (6b₃) from the level of the profile depth (T_{P}) is 0.5 mm to 1.5 mm, preferably 1.0 mm, greater than the distance (a_{b2}) of the second step surface (6b₂) from the level of the profile depth (Tp).

7. Pneumatic vehicle tyre according to one of Claims 1 to 6, **characterized in that** the tread-inner-side channel portion (5b) has a length (l_{b}) projected into the axial direction of 30% to 40%, in particular of 33% to 37%, of the length (l_{QR}) of the transverse channel (5).

8. Pneumatic vehicle tyre according to one of Claims 1 to 7, **characterized in that** the width (b_{b}) of the tread-inner-side channel portion (5b) is 50% to 70%, in particular 55% to 65%, of the width (bₐ) of the tread-outer-side channel portion (5a).

9. Pneumatic vehicle tyre according to one of Claims 1 to 8, **characterized in that** the width (bₐ) of the tread-outer-side channel portion (5a) is 2.5 mm to 5.5 mm, in particular 3.0 mm to 4.5 mm.

10. Pneumatic vehicle tyre according to one of Claims 1 to 9, **characterized in that**, in the radial direction, the tread-outer-side channel portion (5a) has at its lowest point a depth (tₐ) of up to 100% of the profile depth (T_{P}), wherein the depth (tₐ) is in particular 1.0 mm to 1.5 mm smaller than the profile depth (T_{P}).

11. Pneumatic vehicle tyre according to one of Claims 1 to 10, **characterized in that**, in the shoulder-side profile-block row (1), there is formed a circumferentially encircling additional groove (8) which is interrupted by the transverse channels (5) and which is straight in plan view and which has a width (b_{z}) of 1.0 mm to 3.0 mm, in the radial direction has a depth (t_{z}) of 1.5 mm to 2.5 mm, in particular of 2.0 mm, and - in relation to its groove midline (m_{z}) - in the axial direction is at a distance (a_{z}) of 30% to 40% of the length (l_{QR}) of the transverse channels (5) from the shoulder-side circumferential channel (4).

12. Pneumatic vehicle tyre according to one of Claims 1 to 11, **characterized in that** the additional groove (8) opens out into the transition portions (5c) of the respective transverse channels (5).

13. Pneumatic vehicle tyre according to one of Claims 1 to 12, **characterized in that**, when seen in plan view, the transverse channels (5) extend at an angle (α) of 0° to 25°, in particular of 5° to 15°, to the axial direction.

14. Pneumatic vehicle tyre according to one of Claims 1 to 13, **characterized in that** the tread has a second shoulder-side profile-block row (1) which, in relation to the tyre equatorial plane, is configured to be symmetrical with respect to the other shoulder-side profile-block row (1), wherein the second shoulder-side profile-block row (1) is possibly offset circumferentially in relation to the other shoulder-side profile-block row (1).

## Revendications

1. Pneumatique de véhicule avec une bande de roulement avec au moins une rangée de blocs de profil (1) située du côté de l'épaulement, qui est délimitée par une rainure circonférentielle (4) située du côté de l'épaulement, réalisée à la profondeur de profil (T_{P}), et qui est pourvue de rainures transversales (5) s'étendant parallèlement les unes aux autres en vue de dessus, avec respectivement un fond de rainure (6) et une longueur (l_{QR}) projetée dans la direction axiale à l'intérieur de la surface de contact avec le sol, chaque rainure transversale (5) présentant une section de rainure (5a) située du côté extérieur de la bande de roulement, s'étendant sur la majeure partie de sa longueur (l_{QR}) ainsi que sur le bord latéral (l) de la surface de contact avec le sol, avec une largeur (bₐ) déterminée à l'intérieur de la surface de contact avec le sol, et une section de rainure (5b) située du côté intérieur de la bande de roulement, débouchant dans la rainure circonférentielle (4) située du côté de l'épaulement, avec une largeur (b_{b}) constante, inférieure par rapport à la largeur (bₐ) de la section de rainure (5a) située du côté extérieur de la bande de roulement, la section de rainure (5b) située du côté intérieur de la bande de roulement étant réalisée moins profonde sur toute son étendue dans la direction radiale que la section de rainure (5a) située du côté extérieur de la bande de roulement, les rainures transversales (5) se composant respectivement de la section de rainure (5b) située du côté intérieur de la bande de roulement, de la section de rainure (5a) située du côté extérieur de la bande de roulement et d'une section de transition (5c) formée entre les sections de rainure (5a, 5b), s'élargissant en forme d'entonnoir entre celles-ci, **caractérisé en ce que** le fond de rainure (6) présente une section de fond étagée (6b), s'étendant sur la section de rainure (5b) située du côté intérieur de la bande de roulement, avec au moins deux surfaces étagées (6b₁, 6b₂, 6b₃) dans la section de rainure (5b) située du côté intérieur de la bande de roulement,
les surfaces étagées (6b₁, 6b₂, 6b₃) présentant des distances constantes (a_{b1}, a_{b2}, a_{b3}) déterminées par rapport au niveau de la profondeur de profil (T_{P}) dans la direction radiale, qui augmentent progressivement de surface étagée (6b₁, 6b₂, 6b₃) en surface étagée (6b₁, 6b₂, 6b₃) en direction de la rainure circonférentielle située du côté de l'épaulement,
la section de transition (5c) présentant une longueur (l_{c}) projetée dans la direction axiale de 1,0 mm à 3,0 mm.

2. Pneumatique de véhicule selon la revendication 1, **caractérisé en ce que** la distance (a_{b3}) qui est la plus grande représente au plus 50 %, notamment au plus 40 %, de la profondeur de profil (T_{P}).

3. Pneumatique de véhicule selon la revendication 1 ou 2, **caractérisé en ce que** la distance (a_{b1}) qui est la plus petite est d'au moins 2,0 mm.

4. Pneumatique de véhicule selon l'une quelconque des revendications 1 à 3, **caractérisé en ce que** les distances (a_{b1}, a_{b2}, a_{b3}) entre des surfaces étagées (6b₁, 6b₂, 6b₃) directement voisines diffèrent de 0,5 mm à 1,5 mm, notamment de 1,0 mm.

5. Pneumatique de véhicule selon l'une quelconque des revendications 1 à 4, **caractérisé en ce que** la section de base étagée (6b) présente au moins trois, notamment exactement trois ou exactement quatre, surfaces étagées (6b₁, 6b₂, 6b₃).

6. Pneumatique de véhicule selon la revendication 5, **caractérisé en ce que** la section de base étagée (6b) présente exactement trois surfaces étagées (6b₁, 6b₂, 6b₃),
- la distance (a_{b1}) de la première surface étagée (6b₁) par rapport au niveau de la profondeur de profil (T_{P}) étant de 2,0 mm à 3,0 mm, notamment de 2,5 mm,
- la distance (a_{b2}) de la deuxième surface étagée (6b₂) par rapport au niveau de la profondeur de profil (T_{P}) étant supérieure de 0,5 mm à 1,5 mm, de préférence de 1,0 mm, à la distance (a_{b1}) de la première surface étagée (6b₁) par rapport au niveau de la profondeur de profil (T_{P}) et
- la distance (a_{b3}) de la troisième surface étagée (6b₃) par rapport au niveau de la profondeur de profil (T_{P}) étant supérieure de 0,5 mm à 1,5 mm, de préférence de 1,0 mm, à la distance (a_{b2}) de la deuxième surface étagée (6b₂) par rapport au niveau de la profondeur de profil (T_{P}).

7. Pneumatique de véhicule selon l'une quelconque des revendications 1 à 6, **caractérisé en ce que** la section de rainure (5b) située du côté intérieur de la bande de roulement présente une longueur (l_{b}) projetée dans la direction axiale de 30 % à 40 %, notamment de 33 % à 37 %, de la longueur (l_{QR}) de la rainure transversale (5).

8. Pneumatique de véhicule selon l'une quelconque des revendications 1 à 7, **caractérisé en ce que** la largeur (b_{b}) de la section de rainure (5b) située du côté intérieur de la bande de roulement est de 50 % à 70 %, notamment de 55 % à 65 %, de la largeur (bₐ) de la section de rainure (5a) située du côté extérieur de la bande de roulement.

9. Pneumatique de véhicule selon l'une quelconque des revendications 1 à 8, **caractérisé en ce que** la largeur (bₐ) de la section de rainure (5a) située du côté extérieur de la bande de roulement est de 2,5 mm à 5,5 mm, notamment de 3,0 mm à 4,5 mm.

10. Pneumatique de véhicule selon l'une quelconque des revendications 1 à 9, **caractérisé en ce que** la section de rainure (5a) située du côté extérieur de la bande de roulement présente, dans la direction radiale, à son emplacement le plus profond, une profondeur (tₐ) de jusqu'à 100 % de la profondeur de profil (T_{P}), la profondeur (tₐ) étant notamment inférieure de 1,0 mm à 1,5 mm à la profondeur de profil (Tp).

11. Pneumatique de véhicule selon l'une quelconque des revendications 1 à 10, **caractérisé en ce que** dans la rangée de blocs de profil (1) située du côté de l'épaulement est formée une rainure supplémentaire (8) interrompue par les rainures transversales (5), droite en vue de dessus et s'étendant dans la direction circonférentielle, qui présente une largeur (b_{z}) de 1,0 mm à 3,0 mm, dans la direction radiale une profondeur (t_{z}) de 1,5 mm à 2,5 mm, notamment de 2,0 mm, et - par rapport à sa ligne médiane de rainure (m_{z}) - par rapport à la rainure circonférentielle (4) située du côté de l'épaulement dans la direction axiale une distance (a_{z}) de 30 % à 40 % de la longueur (l_{QR}) des rainures transversales (5).

12. Pneumatique de véhicule selon l'une quelconque des revendications 1 à 11, **caractérisé en ce que** la rainure supplémentaire (8) débouche dans les sections de transition (5c) des rainures transversales respectives (5).

13. Pneumatique de véhicule selon l'une quelconque des revendications 1 à 12, **caractérisé en ce que** les rainures transversales (5), considérées en vue de dessus, s'étendent, par rapport à la direction axiale selon un angle (α) de 0° à 25°, notamment de 5° à 15°.

14. Pneumatique de véhicule selon l'une quelconque des revendications 1 à 13, **caractérisé en ce que** la bande de roulement présente une deuxième rangée de blocs de profil (1) située du côté de l'épaulement, qui est réalisée symétriquement à l'autre rangée de blocs de profil (1) située du côté de l'épaulement par rapport au plan équatorial du pneumatique, la deuxième rangée de blocs de profil (1) située du côté de l'épaulement étant éventuellement décalée dans la direction circonférentielle par rapport à l'autre rangée de blocs de profil (1) située du côté de l'épaulement.
